# EUROPEAN PATENT SPECIFICATION

(11) **EP 2 207 108 B1**
(45) Date of publication and mention of the grant of the patent: **27.06.2012**
(21) Application number: 09290007.5
(22) Date of filing: 07.01.2009
(51) Int. Cl.: G06F 17/30

(54) **Method for browsing multimedia content related to an object, a related system, a related browsing device and a service resolving server**
Verfahren zum Durchsuchen von Multimedieninhalt im Bezug auf ein Objekt, ein zugehöriges System, eine zugehörige Durchsuchungseinrichtung und ein Dienstauflösungsserver
Procédé de navigation dans un contenu multimédia par rapport à un objet, système correspondant, dispositif de navigation correspondant et un serveur de résolution de services

(43) Date of publication of application: 14.07.2010
(73) Proprietor: Alcatel Lucent, 75007 Paris (FR)
(72) Inventor: Trappeniers, Lieven, 2200 Herentals (Noorderwijk) (BE); Lou, Zhe, 2000 Antwerp (BE); Godon, Marc Bruno Frieda, 1840 Londerzeel (BE); Zontrop, Pascal, 3128 Baal (BE); Van Broeck, Sigurd, 2980 Zoersel (BE)
(74) Representative: ALU Antw Patent Attorneys

(56) References cited:
- ROHS M: "Marker-Based Interaction Techniques for Camera-Phones" 2ND WORKSHOP ON MULTI-USER AND UBIQUITOUS USER INTERFACES (MU3I) AT IUI, [Online] January 2005 (2005-01), XP002534869 San Diego, California, USA Retrieved from the Internet: URL:http://www.vs.inf.ethz.ch/res/proj/vis ualcodes/rohs-mu3i-final.pdf> [retrieved on 2009-07-01]
- HOLLEIS P ET AL: "Keystroke-Level Model for Advanced Mobile Phone Interaction" CHI 2007 PROCEEDINGS, [Online] 2007, XP002534870 San Jose, CA, USA Retrieved from the Internet: URL:http://www.medien.ifi.lmu.de/pubdb/pub lications/pub/holleis2007chiklm/holleis200 7chiklm.pdf> [retrieved on 2009-07-01]
- LOPEZ-DE-IPINA D ET AL: "Touch Computing: Simplifying Human to Environment Interaction through NFC Technology"[Online] 2007, XP002534871 Retrieved from the Internet: URL:http://paginaspersonales.deusto.es/dip ina/publications/dipinaJornadasRFID-NFC.pd f> [retrieved on 2009-07-01]
- ROHS M ET AL: "A conceptual framework for camera phone-based interaction techniques", LECTURE NOTES IN COMPUTER SCIENCE/MICCAI 2000, SPRINGER, DE, vol. 3468, 1 January 2005 (2005-01-01), pages 171-189, XP003006544, ISBN: 978-3-540-24128-7

## Description

The present invention relates to a Method for controlling a service related to an object according to the preamble of claim 1, a related system according to the preamble of claim 3, a related browsing device according to the preamble of claim 4.

"Marker-Based Interaction Techniques for Camera-Phones" 2nd Workshop on Multi-User and Ubiquitous User Interfaces (MU31) AT IUI, January 2005 by M. Rohs and "A Conceptual Framework for Camera Phone-Based Interaction Techniques" Lecture notes in computer Science/MICCAI 2000, Springer, DE, vol. 3468, 1 January 2005, pages 171-189 by M. Rohs et al disclose a framework that establishes new user interaction metaphors for camera phones based on the orientation of the camera relative to a visual marker and based on optically detected phone movements. A number of basic built-in blocks, called interaction primitives, can be used to construct combined interactions. There are static interaction primitives such as distance, pointing, rotation, tilting, stay, keystroke.

Currently there are well known handheld devices that, in a first step, interact with a physical object and in second step provide a service to a user, for instance present information related to the object to the user of the handheld on the screen of the handheld. Such information related to the object may include audio, video, text or a combination thereof. This kind of scenario is disclosed in any of the following disclosures:

First in a NFC "smart poster" scenario describing how an NFC enable mobile phone reads the URI from the memory of an NFC tag and subsequently sends out a request to this URI. The resulting information is presented to the user. This scenario is disclosed in NFC Smart Poster RTD Technical Specification (http://www.nfc-forum.org/specs/)

Secondly there are several examples in which barcodes (1D and 2D) are read by a handheld device are known. In most cases, similar as in the first disclosure, the encoded URI is used to resolve the related info. Alternative approaches only use an encoded ID that is sent to a pre-defined URI that resolves the ID into the related info. (see httu://en.wikipedia.org/wiki/QR Code or http://semacode.com/

Such a subject is already known in the art, e.g. from "P. (2006). Hovering: Visualizing RFID Hyperlinks in a Mobile Phone. Mobile Interaction with the Real World (MIRW 2006), Espoo, Finland by Valkkynen"

Therein, "Hoovering" is disclosed which is a well-known pattern in HCI (human-computer-interaction) design. It allows people to see basic information about items by moving a pointing device over them. In a Windows desktop, hovering the pointer over shortcuts will result in the display of a URL or so called "tooltips". For Tangible Interactions (for example based on NFC) with objects (for example smart posters), the hovering concept was explored from a HCI (Human Computer Interaction) and visualization perspective. Users can wave their mobile phone over a multitude of NFC tags and are presented with instant visual feedback about the content (URL) of the physical hyperlink.

In each of the above described disclosures of a similar scenario, a snapshot of static information about the physical object is acquired and sent to a function that (after translation/mapping) replies with multi-media content information related to the object, where the service to be provisioned is providing multimedia content that may include audio, video, text, or a combination thereof.

There are some major shortcomings in the user-system. As is apparent, each of these prior-art disclosures rely on (i) the acquisition of static snapshots of information on the physical object. (ii) The handheld device needs to be positioned precisely over the examined object. Additionally, (iii) the subsequent confirmation and navigation is done on the handheld device (by pressing keys). This is a sub-optimal and non-intuitive combination of 2 different modes of operation including touch or short distance communication in combination with a required keyboard interaction.

An object of the present invention is to provide a Method for controlling a service related to an object, a related system, a related browsing device and a related service resolving server of the above known type but wherein the control of the provisioning a service related to an object can be dealt with in a more easy and flexible way.

According to the invention, this object is achieved by the method for controlling a service related to an object according to claim 1, a related system according to claim 4, a related browsing device according to claim 5.

Indeed, by a browsing device, in addition to retrieving object-information on the object based on which a Service Resolving Server is able to resolve a service to be provisioned from a predefined set of services related to this object, further determining a distance between the browsing device and the object and controlling the service to be provisioned based on a distance between the browsing device an easy and very flexible way of provisioning a service to a user provided with can be more easy and flexible.

Hence the resolving of the service to be provisioned can initially be based on the object information related to the object and in addition further the controlling of the service provisioned can be dealt with by changing a distance between the browsing device and the interrogated object.

The control of the provisioning of a service related to the interrogated object is more easy and flexible and consequently more intuitive due to the fact that by moving the browsing device relative to the interrogated object, or the other way around, moving the interrogated object relative to the browsing device, the controlling of the service selected based on the object information of the related object is dealt with in an intuitive way.

Such an object may be any physical object having an attached tag. The object-information related to the object then is included in the tag. The information may be included in a NFC-tag like a RFID-tag or in a barcode (one or two dimensional). In addition, the object-information could also be determined by the shape of the object or the visual appearance, in which case the object-information can be obtained by applying image recognition means. Based on the recognition of the object a service to be provisioned where the service is again related to the object, can be selected from the predefined set of services related to the object.

The service to be provisioned can be the control of some characteristics of a device connected to the object like temperature control of a home heating system or a communications session where the service i.e. setup of a communication-session is initiated based on the object information of the related object. And controlling this service by varying the distance to the object e.g. the volume in de phone call can be modified. In addition the provisioning of a service may also be the provisioning a set of multimedia content items and selecting of items from a this predefined set of items where the selecting is based on the distance between the browsing device and the interrogated object.

Such multimedia content item may include video, image, audio, text or any combination thereof.

The determining of the relative distance between the browsing device and the interrogated object is based on a radio frequency signal strength.

Further characterizing embodiments of the present Method for browsing content related to an object a related system, a related browsing device and a related content resolving server are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents the functional representation of a browsing device BD and a service content resolving server SRS according to the present invention.

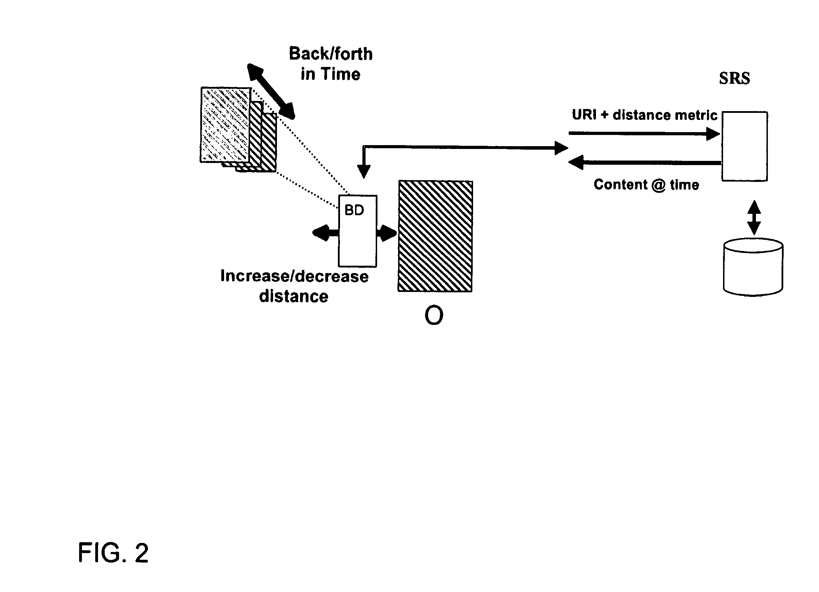

Fig. 2 functionally representing the application of the method of the present invention.

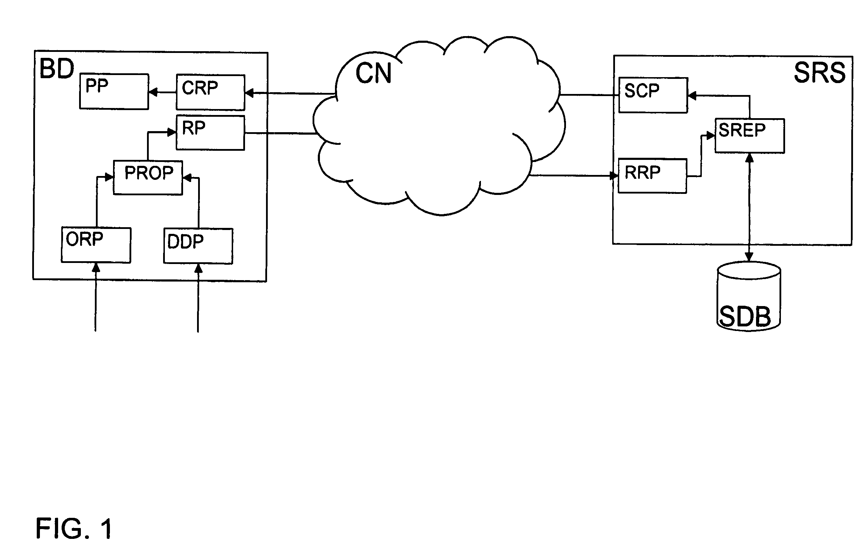

In the following paragraphs, referring to the drawings, an implementation of the Method for controlling a service related to an object a related system, a related browsing device BD and a related service resolving server SRS are mentioned in the appended claims according to the present invention will be described. In the first paragraph of this description the main elements of the service control system as presented in FIG. 1 are described. In the second paragraph, all connections between the before mentioned elements and described means are defined. Subsequently all relevant functional means of the browsing device BD, the service resolving server SRS are described followed by a description of all interconnections.

A first essential element of the present invention is the browsing device BD that is adapted to control a service provisioned from a predefined set of services related to the object. The browsing device may be a mobile phone with NFC reader, the mobile phone working according any GSM standard and having internet access working according to the GPRS standard or any other. Alternatively this browsing device may be a fixed communications device with any tag reader like NFC, RFID. Further there is the service resolving server SRS that is able at request of the browsing device BD to resolve a service to be provisioned from a predefined set of services related to the object O. The browsing device BD and the service resolving server CRS are coupled over a communications network, in this embodiment being a mobile communications network and a connected internet network. In other embodiments any other combination of fixed, mobile and internet networking infrastructure might be used to couple the browsing device BD, the server device SD, the content mapping server CMS and the content resolving server CRS.

The browsing device BD comprises an interacting part IP _ that is adapted to first interact with the interrogated object and a tag retrieving part TRP that is adapted to retrieve the object-information associated to the interrogated object during the interacting.

Further, the browsing device comprises a distance determining part DDP that is able to determine a distance between said browsing device BD and the object O. This distance determination part DDP is based on signal strength of an RF, IR, RFID, Bluetooth, Wifi, ... signal. The browsing device in addition comprises a processing part PROP that is able to process the obtained tag, i.e. The NFC-code, RFID-tag, etc, and the measured distance and based hereon generate a request including the tag and the distance (or any metric indicating distance) between the browsing device and the interrogated object

The browsing device BD further comprises a requesting part RP that is adapted to request the Service Resolving Server SRS for resolving a service to be provisioned from a predefined set of services related to the interrogated object O, based on the object-information and the distance between the browsing device BD and the object O.

Finally, the browsing device BD includes a content receiving part CRP that is adapted to receive multimedia content items and a presenting part PP that is able to present the received multimedia content item to the user of the browsing device. The multimedia content item may include a picture, a movie, sound and/or text and any combination thereof. The presenting part PP of the browser device may include speakers and a display. The Service Resolving Server SRS, comprises a request receiving part RRP that is able to receive a request from the browsing device BD for resolving a service to be provisioned from a predefined set of services associated to the interrogated object O, where the request includes the distance between the browsing device BD and the object O and the object-information.

The service resolving server SRS further comprises the service resolving part SREP, that is able to resolve a service to be provisioned from a predefined set of services related to the object O where the predefined set of services to be provisioned related to the object O may be stored in a service database SDB, based on the object-information and additionally based on the distance between said browsing device BD and said object O.

The service resolving server SRS in addition comprises a service control part SCP that is able to control the service to be provisioned to the browsing device or to another device that is associated to the user of the browsing device and a service database SDB that is adapted to store and provide services associated to an object.

The browsing device has a first input-terminal that is at the same time an input-terminal of the distance determining part DDP that is coupled to the processing part PROP that in turn is coupled to the requesting part RP. The requesting part has an output-terminal that is at the same time an output-terminal of the browsing device BD that is coupled to the communications network CN. In addition there is a second input-terminal that is at the same time an input-terminal of the object information retrieving part ORP that is coupled to the processing part PROP. Further, the browsing device has a third input-terminal that is at the same time an input-terminal of the content receiving part CRP that is coupled to the presenting part PP.

The Service Resolving Server SRS, has a first input-terminal that is at the same time an input-terminal of the request receiving part RRP that is coupled to the service resolving part SREP that in turn is coupled to the service control part SCP. The service control part SCP has an output-terminal that is at the same time an output-terminal of the service resolving server SRS that is coupled to the communications network CN.

The service resolving part SREP in addition is coupled to the service database SDB over an internal or external coupling.

In order to explain the operation of the present invention it is assumed that the browsing device BD is a mobile phone like a GSM telephone with a NFC or RFID tag reader. The object to be browsed is a Panini card O having a RFID-tag attached to the card. In this particular embodiment the service to be provisioned is the providing set of multimedia content items. By means of the RFID tag a set of multimedia content items like video clips about the history of a well known football player, is associated to the Panini card. The video clips subsequently deal with all important steps in the football career of the mentioned football player.

The user of the mobile phone BD approaches the Panini card O with his NFC enabled phone and is able to read the RFID-tag associated to the Panini card of the football player. Hence the object-information retrieving part ORP retrieves the object-information, i.e. the RFID-tag from the Panini card. This object-information here being a tag that includes a Uniform Resource Identifier, further referred to as an URI. This URI points to a location where the service to be provisioned i.e. the set of multimedia content items is stored. At the same time the distance determining part DDP determines a distance between the browsing device BD and the Panini card O.

The processing part PROP of the browsing device subsequently processes the obtained tag, i.e. The NFC-code, RFID-tag, in combination with the measured distance and based hereon generates a request including the tag and the distance between the browsing device and the interrogated object. The generated service request including the URI and the distance metric to the server (for example in the form http://URI?distance=12).

The requesting part RP of the browsing device BD then sends the generated request message for requesting the Service Resolving Server SRS for resolving a service to be provisioned, in this embodiment being a multimedia-content item from a predefined set of multimedia-content items related to the interrogated object O, based on the object-information URI and the distance 12 (centimeter) between the browsing device BD and the object O.

The request receiving part RRP subsequently receives the request message http://*URI?distance=12* from the browsing device BD for resolving a service to be provisioned, i.e. the multimedia-content item from a predefined set of multimedia-content items associated to the interrogated object O, where the request includes the distance of 12 centimeter between the browsing device BD and the object O and the object-information being identified by URI.

The service resolving part SREP of the service resolving server SRS, then resolves a multimedia-content item from a predefined set of multimedia-content items related to the object O where the predefined set of multimedia-content items related to the object O may be stored in a service database SDB, based on the object-information and additionally based on the distance between said browsing device BD and said object O. The service database SDB may contain a table with entries of the URI in combination with a distance where each entry of the table is linked to a multimedia content item related to this football player. The multimedia content item related to URI and distance 12 is a video-clip about the most beautiful goals of the football player from last year.

In the alternative the service database CSB may contain several metrics that combined with the URI determine the associated the multimedia content item.

Subsequently the resolved multimedia content item, i.e. video-clip about the most beautiful goals of the football player from last year, is, under control of the service resolving part SREP, retrieved from the service database and provided to the service control part CSP that subsequently controls the service to be provisioned i.e. in this embodiment sends the resolved content towards the service receiving part SRP of the browsing device.

Alternatively, the service control part CSP of the service resolving server SRS could provision the service send the multimedia content item to another device that is associated to the user of the browsing device BD.

Finally, service receiving part CRP of the browsing device BD forwards the received video clip towards the presenting part PP that is shows the video clip on the display of the mobile phone and plays the background music with comments via the speakers of the mobile phone.

Now by moving the mobile phone back and forth, in this way respectively increasing or decreasing the distance between the mobile phone and the Panini card O the user browses through the video clips about the most beautiful goals of the various years of the career of the football player, hence by moving the phone closer to the card more recent a video clip of more recent years is selected or by enlarging the distance between the phone and the card, a video-clip about older years is selected.

In an alternative embodiment a central heating system can be controlled using a browsing device BD where some central home appliance control device O has a tag attached containing the URI of the web service endpoint of the central heating system. The distance of the BD to the tag determines the temperature being set in the central heating system. An optional confirmation step might be included in the embodiment.

In order to explain the operation of the present invention it is again assumed that the browsing device BD is a mobile phone like a GSM telephone with a NFC or RFID tag reader. The object to be browsed is the central home appliance control device O having a RFID-tag attached to the device. In this particular embodiment the service to be provisioned is the controlling of the temperature in house. By means of the RFID tag a service, i.e. control of the central heating system, is associated to central home appliance control device O.

The user of the mobile phone BD approaches the central home appliance control device O with his NFC enabled phone and is able to read the RFID-tag associated to the central home appliance control device O. Hence the object-information retrieving part TRP retrieves the object-information, i.e. the RFID-tag from the central home appliance control device O. This object-information here being a tag that includes a Uniform Resource Identifier, further referred to as an URI. This URI points to a location where the service to be provisioned, i.e. the set of services to be provisioned by the central home appliance control device O is stored. At the same time the distance determining part DDP determines a distance between the browsing device BD and the tag of the central home appliance control device O.

The processing part PROP of the browsing device subsequently processes the obtained tag, i.e. The NFC-code, RFID-tag, in combination with the measured distance and based hereon generates a request including the tag and the distance between the browsing device and the interrogated object. The generated service request including the URIx and the distance metric to the server (for example in the form http://URI?distance=20).

The requesting part RP of the browsing device BD then sends the generated request message for requesting the Service Resolving Server SRS for resolving a service to be provisioned, in this embodiment being a the control of the temperature by means of the central home appliance control device O, based on the object-information URI and the distance 20 (centimeter) between the browsing device BD and the object O for setting the temperature on 20 degrees Celsius.

The request receiving part RRP subsequently receives the request message http://*URI?distance=20* from the browsing device BD for resolving a service to be provisioned, i.e. controlling the temperature by means of the central home appliance control device O, from a predefined set services to be provisioned associated to the interrogated object O the central home appliance control device O, where the request includes the distance of 20 centimeter between the browsing device BD and the object O and the object-information being identified by URI.

The service resolving part SREP of the service resolving server SRS, then resolves a the service temperature control from a predefined set of services like temperature control, lighting control and control of other in-house systems related to the central home appliance control device O, where the predefined set of services to be provisioned related to the central home appliance control device O, may be stored in a service database SDB, based on the object-information and additionally based on the distance between said browsing device BD and the central home appliance control device O. The service database SDB may contain a table with entries of the URI in combination with a distance where each entry of the table is linked to a service to be provided. The service, i.e. the control of the temperature by means of the central home appliance control device O related to URI and distance 20, is first selecting service temperature control and subsequently setting the value of 2o degrees Celsius based on the distance between the browsing device and the tag attached to the central home appliance control device O,

Subsequently the resolved service to be provisioned, i.e. temperature control is, under control of the service resolving part SREP, retrieved from the service database and provided to the service control part SCP that subsequently controls the service to be provisioned i.e. in this embodiment the temperature request for setting 20 degrees of Celsius to the connected central home appliance control device O, sends the resolved content towards the service receiving part SRP of the browsing device.

Now by moving the mobile phone back and forth, in this way respectively increasing or decreasing the distance between the mobile phone and the tag attached to the central home appliance control device O, the user changes the temperature settings in the temperature control part of the central home appliance control device O. Hence by moving the phone closer to tag attached to the central home appliance control device O, the temperature-setting is decreased or by enlarging the distance between the phone and the central home appliance control device O, the temperature is increased.

The newly introduced functions can both be either on the handheld device or on the server, separated or together.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for controlling a service associated to an object (O), said method comprising the steps of:
a. a browsing device (BD) retrieving object-information on said object (O) during interacting with said object (O); and
b. determining a distance x between said browsing device (BD) and said object (O);
c. controlling a service to be provisioned based on a distance between said browsing device and said object (O), wherein said service is a control of a characteristic of a device connected to the object, or a multimedia content item related to the object;
d. a Content Resolving Server (CRS), resolving said service to be provisioned from a predefined set of services related to said object (O), based on said Object-information,
**CHARACTERISED**
**IN THAT** the object information is retrieved by reading an RFID or an NFC tag provided on the object;
**IN THAT** the determining of the distance between the browsing device and the object is based on a signal strength of a signal from the RFID or the NFC tag;
**IN THAT** the retrieved object information includes a URI, and
**IN THAT** the method comprises between step b. and step c. the steps of:
- the browsing device generating a service request in the form of httD://URI?distance=x;
- the browsing device sending said service request to the content resolving server.

2. Method for controlling a service according to claim 1, **CHARACTERISED IN THAT** said method further comprises the step of e. provisioning said service resolved to a user of said browsing device (BD).

3. System for controlling a service associated to an object (O), said system comprising:
a. a browsing device comprising an object information retrieving part (ORP) adapted to retrieve object-information during interacting with an object (O); and
b. distance determining part (DDP), adapted to determine a distance between said browsing device (BD) and said object (O);
c. a Service Resolving Server (SRS), coupled to said browsing device (BD), adapted to resolve a service to be provisioned from a predefined set of services to be provisioned related to said object (O), based on said object-information,
and d. a service control part (SCP), adapted to control said service to be provisioned based on said distance between said browsing device and said object (O)), wherein said service is a control of a characteristic of a device connected to the object, or a multimedia content item related to the object;
**CHARACTERISED IN THAT** said object is provided with an RFID or NFC tag;
**IN THAT** said distance determining part (PDP) is adapted to determine the distance based on a strength of a signal of the RFID or the NFC tag;
**IN THAT** said object information retrieving part (ORP) is adapted to read the RFID or NFC tag including a uniform resource identifier (URI); and
**IN THAT** said browsing device (BD) further comprises a processing part adapted to process the object information URIx in combination with the determined distance and based thereon to generate a service request including the object information and the determined distance in the form http://URI?distance=x.

4. Browsing device (BD), for controlling a service associated to an object (O) provided with an RFID or an NFC tag, said browsing device (BD) comprising:
a. an object information retrieving part (ORP), adapted to retrieve said object-information during interacting with said object (O); and
b. a distance determining part (DDP), adapted to determine a distance between said browsing device (BD) and said object (O),
c. requesting part (RP), adapted to request a content Resolving Server (CRS) for resolving a service to be provisioned from a predefined set of services to be provisioned related to said object (O), based on said object-information, further adapted to request said content Resolving Server (CRS) to control said service to be provisioned based on said distance between said browsing device and said object (O), wherein said service is a control of a characteristic of a device connected to the object, or a multimedia content item related to the object;
**CHARACTERISED**
**IN THAT** said distance determining part is adapted to determine the distance based on a strength of a signal of the RFID or the NFC tag;
**IN THAT** said object information retrieving part is adapted to read the RFID or NFC tag including a uniform resource identifier (URI); and
**IN THAT** said browsing device (BD) further comprises a processing part adapted to process the object information (URIx) in combination with the determined distance and based thereon to generate a service request including the object information and the determined distance in the form http://URI?distance=x.

5. Browsing device (BD), according to claim 4, **CHARACTERISED IN THAT**, said browsing device further comprises a content receiving part (CRP), adapted to receive a multimedia content item forwarded by said Content Resolving server (CRS).

## Patentansprüche

1. Verfahren zur Steuerung eines mit einem Objekt (O) assoziierten Dienstes, wobei das besagte Verfahren die folgenden Schritte umfasst:
a. Abrufen, durch eine Durchsuchungseinrichtung (BD), von Objektinformationen über das besagte Objekt (O) während der Wechselwirkung mit dem besagten Objekt (O); und
b. Ermitteln einer Entfernung x zwischen der besagten Durchsuchungseinrichtung (BD) und dem besagten Objekt (O);
c. Steuern eines freizuschaltenden Dienstes auf der Basis einer Entfernung zwischen der besagten Durchsuchungseinrichtung und dem besagten Objekt (O), wobei der besagte Dienst eine Steuerung einer Charakteristik einer mit dem Objekt verbundenen Vorrichtung oder ein Multimediainhaltsposten in Bezug auf ein Objekt ist;
d. Auflösen, durch einen Inhaltsauflösungsserver (CRS), des besagten freizuschaltenden Dienstes aus einem vordefinierten Satz von Diensten in Bezug auf das besagte Objekt (O) auf der Basis der besagten Objektinformationen,
**DADURCH GEKENNZEICHNET,**
**DASS** die Objektinformationen durch Auslesen eines auf dem Objekt bereitgestellten RFID- oder NFC-Tags abgerufen wird;
**DASS** das Ermitteln der Entfernung zwischen der Durchsuchungseinrichtung und dem Objekt auf einer Signalstärke eines Signals von dem RFID- oder dem NFC-Tag basiert;
**DASS** die abgerufenen Objektinformationen eine URI enthalten, und
**DASS** das Verfahren zwischen Schritt b. und Schritt c. die folgenden Schritte umfasst:
- Erzeugen, durch die Durchsuchungseinrichtung, einer Dienstanforderung in der Form von http://URI?distance=x;
- Senden, durch die Durchsuchungseinrichtung, der besagten Dienstanforderung an den Inhaltsauflösungsserver.

2. Verfahren zur Steuerung eines Dienstes nach Anspruch 1,
**DADURCH GEKENNZEICHNET, DASS** das besagte Verfahren weiterhin den folgenden Schritt umfasst:
e. Freischalten des besagten aufgelösten Dienstes an einen Benutzer der besagten Durchsuchungseinrichtung (BD).

3. System zur Steuerung eines mit einem Objekt (O) assoziierten Dienstes, wobei das System umfasst:
a. Eine Durchsuchungseinrichtung mit einem Objektinformationsabrufteil (ORP), welcher dazu ausgelegt ist, die Objektinformationen während der Wechselwirkung mit einem Objekt (O) abzurufen; und
b. einen Entfernungsermittlungsteil (DDP), welcher dazu ausgelegt ist, eine Entfernung zwischen der besagten Durchsuchungseinrichtung (BD) und dem besagten Objekt (O) zu ermitteln;
c. einen Dienstauflösungsserver (SRS), welcher an die besagte Durchsuchungseinrichtung (BD) gekoppelt und dazu ausgelegt ist, einen freizuschaltenden Dienst aus einem vordefinierten Satz von freizuschaltenden Diensten in Bezug auf das besagte Objekt (O) auf der Basis der besagten Objektinformationen aufzulösen, und
d. einen Dienststeuerungsteil (SCP), welcher dazu ausgelegt ist, den besagten freizuschaltenden Dienst auf der Basis der besagten Entfernung zwischen der besagten Durchsuchungseinrichtung und dem besagten Objekt (O) zu steuern, wobei der besagte Dienst eine Steuerung einer Charakteristik einer mit dem Objekt verbundenen Vorrichtung oder ein Multimediainhaltsposten in Bezug auf das Objekt ist;
**DADURCH GEKENNZEICHNET,**
**DASS** das besagte Objekt mit einem RFID- oder NFC-Tag versehen ist;
**DASS** der besagte Entfernungsermittlungsteil (DDP) dazu ausgelegt ist, die Entfernung auf der Basis einer Stärke eines Signals des RFID- oder NFC-Tags zu ermitteln;
**DASS** der besagte Objektinformationsabrufteil (ORP) dazu ausgelegt ist, den RFID- oder NFC-Tag, welcher eine einheitliche Ressourcenkennung (URI) enthält, auszulesen; und
**DASS** die besagte Durchsuchungseinrichtung (BD) weiterhin einen Verarbeitungsteil umfasst, der dazu ausgelegt ist, die Objektinformation URIx in Kombination mit der ermittelten Entfernung zu verarbeiten und darauf basierend eine Dienstanforderung, welche die Objektinformationen und die ermittelte Entfernung in der Form von http://URI?distance=x enthält, zu erzeugen.

4. Durchsuchungseinrichtung (BD) zur Steuerung eines mit einem Objekt (O), welches mit einem RFID- oder einem NFC-Tag versehen ist, assoziierten Dienstes, wobei die besagte Durchsuchungseinrichtung (BD) umfasst:
a. Einen Objektinformationsabrufteil (ORP), welcher dazu ausgelegt ist, die besagten Objektinformationen während der Wechselwirkung mit dem besagten Objekt (O) abzurufen; und
b. einen Entfernungsermittlungsteil (DDP), welcher dazu ausgelegt ist, eine Entfernung zwischen der besagten Durchsuchungseinrichtung (BD) und dem besagten Objekt (O) zu ermitteln,
c. einen Anforderungsteil (RP), welcher dazu ausgelegt ist, einen Inhaltsauflösungsserver (CRS) aufzufordern, einen freizuschaltenden Dienst aus einem vordefinierten Satz von freizuschaltenden Diensten in Bezug auf das besagte Objekt (O) auf der Basis der besagten Objektinformationen aufzulösen,
weiterhin dazu ausgelegt, den besagten Inhaltsauflösungsserver (CRS) aufzufordern, den besagten freizuschaltenden Dienst auf der Basis der besagten Entfernung zwischen der besagten Durchsuchungseinrichtung und dem besagten Objekt (O) zu steuern, wobei der besagte Dienst eine Steuerung einer Charakteristik einer mit dem Objekt verbundenen Vorrichtung oder ein Multimediainhaltsposten in Bezug auf das Objekt ist;
**DADURCH GEKENNZEICHNET,**
**DASS** der besagte Entfernungsermittlungsteil dazu ausgelegt ist, die Entfernung auf der Basis einer Stärke eines Signals des RFID- oder des NFC-Tags zu ermitteln;
**DASS** der besagte Objektinformationsabrufteil dazu ausgelegt ist, den RFID- oder NFC-Tag, welcher eine einheitliche Ressourcenkennung (URI) enthält, auszulesen; und
**DASS** die besagte Durchsuchungseinrichtung (BD) weiterhin einen Verarbeitungsteil umfasst, welcher dazu ausgelegt ist, die Objektinformationen (URIx) in Kombination mit der ermittelten Entfernung und darauf basierend zu verarbeiten, um eine Dienstanforderung, welche die Objektinformationen und die ermittelte Entfernung in der Form von http://URI?distance=x enthält, zu erzeugen.

5. Durchsuchungseinrichtung (BD) nach Anspruch 4,
**DADURCH GEKENNZEICHNET, DASS** die besagte Durchsuchungseinrichtung weiterhin einen Inhaltsempfangsteil (CRP) umfasst, welcher für den Empfang eines von dem besagten Inhaltsauflösungsserver (CRS) weitergeleiteten Multimediainhaltspostens ausgelegt ist.

## Revendications

1. Procédé de commande d'un service associé à un objet (O), ledit procédé comprenant les étapes suivantes :
a. récupération, par un dispositif de navigation (BD), d'informations objet concernant ledit objet (O) au cours de l'interaction avec ledit objet (O) ; et
b. détermination d'une distance x entre ledit dispositif de navigation (BD) et ledit objet (O) ;
c. commande d'un service à fournir en se basant sur une distance entre ledit dispositif de navigation et ledit objet (O), dans lequel ledit service est une commande d'une caractéristique d'un dispositif connecté à l'objet, ou un élément de contenu multimédia associé à l'objet ;
d. résolution, par un serveur de résolution de contenu (CRS), dudit service à fournir à partir d'un ensemble prédéfini de services associés audit objet (O), en se basant sur lesdites informations objet,
**CARACTÉRISÉ**
**EN CE QUE** les informations objet sont récupérées en lisant une étiquette RFID ou NFC fournie sur l'objet ;
**EN CE QUE** la détermination de la distance entre le dispositif de navigation et l'objet est basée sur une intensité de signal d'un signal à partir de l'étiquette RFID ou NFC ;
**EN CE QUE** les informations objet récupérées comprennent un URI, et
**EN CE QUE** le procédé comprend entre l'étape b. et l'étape c. les étapes suivantes :
- génération, par le dispositif de navigation, d'une demande de service sous la forme de http://URI?distance=x ;
- envoi, par le dispositif de navigation, de ladite demande de service au serveur de résolution de contenu.

2. Procédé de commande d'un service selon la revendication 1,
**CARACTÉRISÉ EN CE QUE** ledit procédé comprend l'étape suivante :
e. fourniture dudit service résolu à un utilisateur dudit dispositif de navigation (BD).

3. Procédé de commande d'un service associé à un objet (O), ledit procédé comprenant :
a. un dispositif de navigation comprenant une partie de récupération d'informations objet (ORP) adaptée pour récupérer des informations objet au cours de l'interaction avec un objet (O) ; et
b. une partie de détermination de distance (DDP), adaptée pour déterminer une distance entre ledit dispositif de navigation (BD) et ledit objet (O) ;
c. un serveur de résolution de service (SRS), couplé audit dispositif de navigation (BD), adapté pour résoudre un service à fournir à partir d'un ensemble prédéfini de services associés audit objet (O), en se basant sur lesdites informations objet, et
d. une partie de commande de service (SCP), adaptée pour commander ledit service à fournir en se basant sur ladite distance entre ledit dispositif de navigation et ledit objet (O), dans laquelle ledit service est une commande d'une caractéristique d'un dispositif connecté à l'objet, ou un élément de contenu multimédia associé à l'objet ;
**CARACTÉRISÉ EN CE QUE** ledit objet est fourni avec une étiquette RFID ou NFC ;
**EN CE QUE** ladite partie de détermination de la distance (DDP) est adaptée pour déterminer la distance en se basant sur l'intensité d'un signal de l'étiquette RFID ou NFC ;
**EN CE QUE** ladite partie de récupération des informations objet (ORP) est adaptée pour lire l'étiquette RFID ou NFC comprenant un identifiant de ressource uniforme (URI) ; et
**EN CE QUE** ledit dispositif de navigation (BD) comprend en outre une partie de traitement adaptée pour traiter les informations objet URIx conjointement à la distance déterminée et en se basant sur celles-ci pour générer une demande de service comprenant les informations objet et la distance déterminée sous la forme http://URI?distance=x.

4. Dispositif de navigation (BD), pour commander un service associé à un objet (O) fourni avec une étiquette RFID ou NFC, ledit dispositif de navigation (BD) comprenant :
a. une partie de récupération d'informations objet (ORP) adaptée pour récupérer lesdites informations objet au cours de l'interaction avec ledit objet (O) ; et
b. une partie de détermination de distance (DDP), adaptée pour déterminer une distance entre ledit dispositif de navigation (BD) et ledit objet (O),c. une partie de demande (RP), adaptée pour demander à un serveur de résolution de contenu (CRS) de résoudre un service à fournir à partir d'un ensemble prédéfini de services à fournir associés audit objet (O), en se basant sur lesdites informations objet,
adaptée en outre pour demander audit serveur de résolution de contenu (CRS) de commander ledit service à fournir en se basant sur ladite distance entre ledit dispositif de navigation et ledit objet (O), dans lequel ledit service est une commande d'une caractéristique d'un dispositif connecté à l'objet, ou un élément de contenu multimédia associé à l'objet ;
**CARACTÉRISÉ**
**EN CE QUE** ladite partie de détermination de distance est adaptée pour déterminer la distance en se basant sur l'intensité d'un signal de l'étiquette RFID ou NFC ;
**EN CE QUE** ladite partie de récupération des informations objet est adaptée pour lire l'étiquette RFID ou NFC comprenant un identifiant de ressource uniforme (URI) ; et
**EN CE QUE** ledit dispositif de navigation (BD) comprend en outre une partie de traitement adaptée pour traiter les informations objet (URIx) conjointement à la distance déterminée et en se basant sur celles-ci pour générer une demande de service comprenant les informations objet et la distance déterminée sous la forme http://URI?distance=x.

5. Dispositif de navigation (BD), selon la revendication 4,
**CARACTÉRISÉ EN CE QUE** ledit dispositif de navigation comprend en outre une partie de réception de contenu (CRP), adaptée pour recevoir un élément de contenu multimédia transféré par ledit serveur de résolution de contenu (CRS).
